# FASCICULE DE BREVET EUROPEEN

(11) **EP 3 898 740 B1**
(45) Date de publication et mention de la délivrance du brevet: **26.03.2025**
(21) Numéro de dépôt: 19845612.1
(22) Date de dépôt: 18.12.2019
(51) Int. Cl.: C08G 18/12, C08F 290/06, C08F 290/14, C08G 18/22, C08G 18/66, C08G 18/67, C08G 18/76, C08L 75/14, C08L 75/16, C09J 175/14, C09J 175/16, C09D 175/14, C09D 175/16

(54) **COMPOSITION (MÉTH)ACRYLIQUE COMPRENANT UN POLYURÉTHANE MODIFIÉ**
(METH)ACRYLZUSAMMENSETZUNG MIT MODIFIZIERTEM POLYURETHAN
(METH)ACRYLIC COMPOSITION COMPRISING A MODIFIED POLYURETHANE

(30) Priorité: 19.12.2018 FR 1873364
(43) Date de publication de la demande: 27.10.2021
(73) Titulaire: Bostik SA, 92700 Colombes (FR)
(72) Inventeur: MICHAUD, Guillaume, 60280 VENETTE (FR)
(74) Mandataire: Arkema Patent
(86) Numéro de dépôt international: PCT/FR2019/053149
(87) Numéro de publication internationale: WO 2020/128325

(56) Documents cités:
- WO-A1-2012/164020
- WO-A1-2017/151387
- US-A- 3 810 871

## Description

### DOMAINE DE L'INVENTION

La présente invention concerne un polyuréthane modifié par une amine tertiaire substituée par un groupement aromatique.

La présente invention concerne également son procédé de préparation, ainsi que son utilisation dans des compositions de type (méth)acrylique.

### ARRIERE-PLAN TECHNOLOGIQUE

Les compositions acryliques sont des systèmes réactifs connus réticulant par polymérisation radicalaire. Elles sont utilisées comme adhésifs, mastics et revêtements. La polymérisation radicalaire est typiquement amorcée par un système rédox qui par le biais d'une réaction d'oxydo-réduction conduit à la production de radicaux.

La majorité des systèmes acryliques sont des systèmes bicomposants. Le premier composant contient traditionnellement l'agent réducteur et les monomères réactifs, et le second composant contient l'agent oxydant. Une fois les deux composants mélangés, l'agent réducteur induit la coupure de la liaison O-O du peroxyde organique, et initie la polymérisation.

Les anilines substituées sont principalement utilisées comme agent réducteur du système rédox. On peut par exemple citer la N,N-diméthylaniline ou encore la N,N-diméthyl-p-toluidine. Toutefois, ces molécules présentent plusieurs inconvénients : elles sont volatiles, elles sont classées CMR (Cancérigène-mutagène-toxique pour la reproduction), elles peuvent migrer au cours du temps après la polymérisation conduisant notamment à un jaunissement du collage ou à une perte d'adhésion. WO2012/164020 décrit une composition de résine comprenant une résine polyester unsaturé et/ou une résine methacrylate.

Il existe donc un besoin pour de nouveaux systèmes acryliques ne présentant pas au moins l'un des inconvénients susmentionnés.

En particulier, il existe un besoin pour de nouvelles compositions acryliques moins toxiques pour l'homme et l'environnement.

Il existe également un besoin pour de nouvelles compositions acryliques moins toxiques pour l'homme et l'environnement, et présentant de bonnes propriétés d'adhésion.

### DESCRIPTION DE L'INVENTION

Dans la présente demande, en l'absence d'indication contraire :
- les quantités exprimées sous la forme de pourcentage correspondent à des pourcentages poids/poids ;
- l'indice hydroxyle d'un composé alcoolique représente le nombre de fonctions hydroxyles par gramme de produit, lequel est exprimé sous la forme du nombre équivalent de milligrammes de potasse (mg KOH/g) utilisés dans le dosage des fonctions hydroxyles, par gramme de produit ;

- la mesure de viscosité à 23°C (ou à 100°C ou à 70°C) peut se faire à l'aide d'un viscosimètre Brookfield selon la norme ISO 2555. Typiquement, la mesure réalisée à 23°C (ou à 100°C ou à 70°C) peut se faire à l'aide d'un viscosimètre Brookfield RVT, d'une aiguille adaptée au domaine de viscosité et à une vitesse de rotation de 20 tours par minute (tr/mn);
- les masses moléculaires moyennes en nombre (Mn) des polyols exprimées en g/mole sont calculées à partir de leurs indices d'hydroxyles (IOH) et de leurs fonctionnalités.

### Procédé

La présente invention concerne un procédé de préparation d'un polyuréthane comprenant :
- E1) une étape de préparation d'un polyuréthane à terminaisons NCO comprenant la réaction de polyaddition entre :
   - i) au moins un polyisocyanate ;
   - ii) au moins un polyol ; et
   - iii) au moins une amine ayant la formule (I) ou (II) suivante : 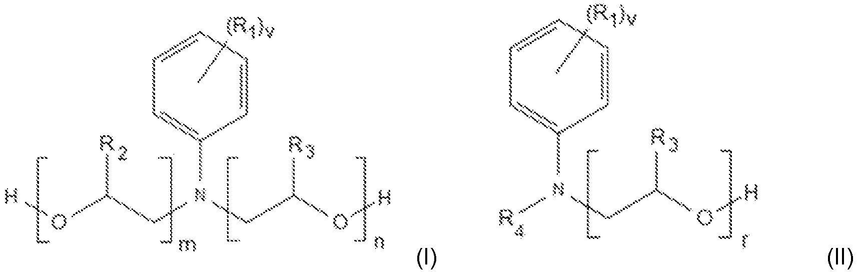 dans laquelle :
      - m et n sont, indépendamment l'un de l'autre, un nombre entier allant de 1 à 150, de préférence de 1 à 100, préférentiellement de 1 à 72, avantageusement de 1 à 36, encore plus avantageusement de 1 à 18;
      - r est un nombre entier allant de 1 à 200, de préférence de 1 à 104, préférentiellement de 1 à 72, avantageusement de 1 à 36 ;
      - R¹ représente un radical choisi dans le groupe constitué d'un alkyle, linéaire ou ramifié, saturé ou insaturé, comprenant de 1 à 20 atomes de carbone, de préférence de 1 à 10 atomes de carbone ; d'un (hétéro)aryle comprenant de 6 à 12 atomes de carbone ; d'un cycloalkyle comprenant de 3 à 12 atomes de carbone ;
      - v représente un nombre entier allant de 0 à 5 ;
      - R² et R³ représentent, indépendamment l'un de l'autre, un atome d'halogène, un atome d'hydrogène ou un groupe alkyle, linéaire ou ramifié, comprenant de 1 à 12 atomes de carbone, ledit groupe alkyle étant éventuellement interrompu par au moins un atome d'oxygène ;
      - R⁴ représente un atome d'hydrogène, un groupe arylalkyle, ou un groupe alkyle, linéaire ou ramifié, comprenant de 1 à 20 atomes de carbone, de préférence un groupe alkyle comprenant de 1 à 12 atomes de carbone, avantageusement de 1 à 6 atomes de carbone ;
      - à condition que m + n > 2, de préférence n + m ≥ 2,5 ;
         et
- E2) la réaction du produit formé à l'issue de l'étape E1) avec au moins un monomère (méth)acrylate ou allylique M comprenant au moins une fonction hydroxyle.

### Polyisocyanate(s)

Le(s) polyisocyanate(s) utilisable(s) peut(vent) être ajouté(s) séquentiellement ou mis à réagir sous la forme de mélange.

Le(s) polyisocyanate(s) peut(vent) être choisi(s) parmi les diisocyanates ou les triisocyanates.

Selon un mode de réalisation, le(s) polyisocyanate(s) sont des diisocyanate(s), de préférence choisi(s) dans le groupe constitué de l'isophorone diisocyanate (IPDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 2,4'-méthylènebis(cyclohexylisocyanate) (2,4'-H6MDI), du 4,4'-méthylènebis(cyclohexylisocyanate) (4,4'-H6MDI), du norbornane diisocyanate, du norbornène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du bis(isocyanatomethyl)cyclohexane (H6-XDI) (en particulier le 1,3-bis(isocyanatomethyl)cyclohexane (1,3-H6-XDI)), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou le 2,4'-diphénylméthane diisocyanate (2,4'-MDI), du tétraméthylxylylène diisocyanate (TMXDI) (en particulier le tétraméthyl m-xylylène diisocyanate), d'un allophanate de HDI ayant par exemple la formule (Y) suivante : 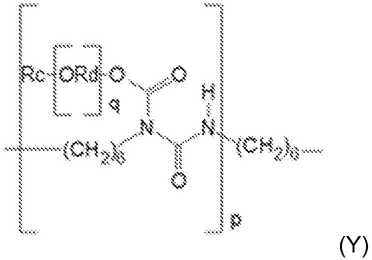 dans laquelle p est un nombre entier allant de 1 à 2, q est un nombre entier allant de 0 à 9, et de préférence 2 à 5, R_{c} représente une chaine hydrocarbonée, saturée ou insaturée, cyclique ou acyclique, linéaire ou ramifiée, comprenant de 1 à 20 atomes de carbone, de préférence de 6 à 14 atomes de carbone, R_{d} représente un groupe divalent alkylène, linéaire ou ramifié, ayant de 2 à 4 atomes de carbones, et de préférence un groupe divalent propylène ;
et de leurs mélanges.

De préférence, l'allophanate de formule (Y) susmentionnée est tel que p, q, R_{c} et R_{d} sont choisis tel que le dérivé d'allophanate de HDI ci-dessus comprend une teneur en groupe isocyanate NCO allant de 12 à 14% en poids par rapport au poids dudit dérivé.

Selon un mode de réalisation, le(s) polyisocyanate(s) utilisable(s) sont des triisocyanate(s), de préférence choisi(s) parmi les isocyanurates, les biurets, et les adduits de diisocyanates et de triols.

En particulier, le(s) isocyanurate(s) peuvent être utilisé(s) sous la forme d'un mélange technique de (poly)isocyanurate(s) de pureté supérieure ou égale à 70% en poids isocyanurate(s).

Le(s) isocyanurate(s) de diisocyanate utilisable(s) selon l'invention peut(vent) répondre à la formule générale (W) suivante : 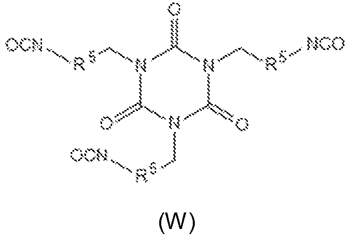 dans laquelle :
R⁵ représente un groupe alkylène, linéaire ou ramifié, cyclique, aliphatique, arylaliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

A titre d'exemple de trimères de diisocyanates utilisables selon l'invention, on peut citer :
- le trimère isocyanurate d'hexaméthylène diisocyanate (HDI) : 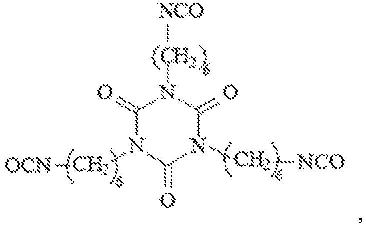
- le trimère isocyanurate d'isophorone diisocyanate (IPDI) : 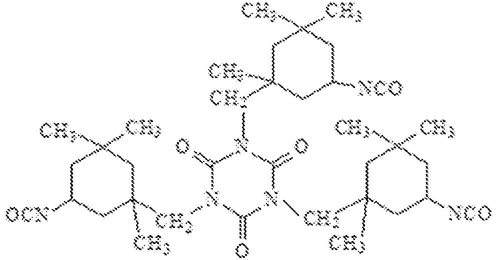
- le trimère isocyanurate de pentaméthylène diisocyanate (PDI) : 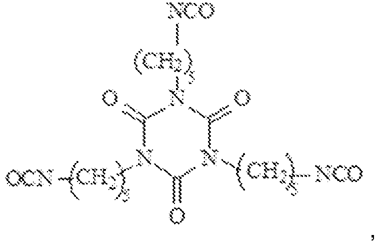
- le trimère isocyanurate du méta-xylylène diisocyanate (m-XDI) : 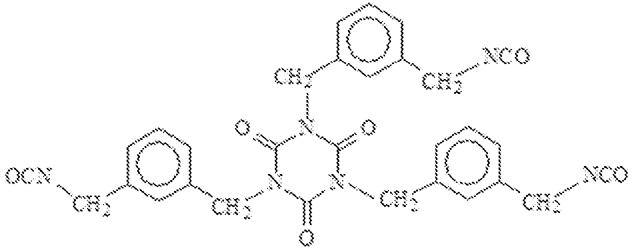
- le trimère isocyanurate du m-XDI, sous forme hydrogénée :

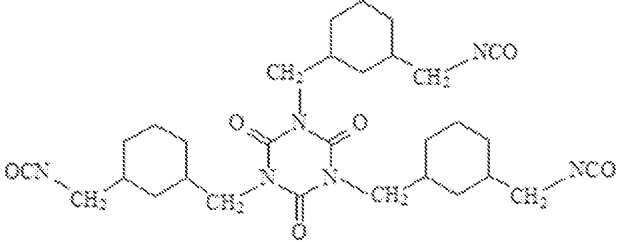

A titre d'exemple d'adduits de diisocyanates et de triols utilisables selon l'invention, on peut citer l'adduit de méta-xylylène diisocyanate et de triméthylolpropane, tel que représenté ci-dessous. Cet adduit est commercialisé par exemple par la société MITSUI CHEMICALS, Inc sous la dénomination « TAKENATE^{®} D-110N ».

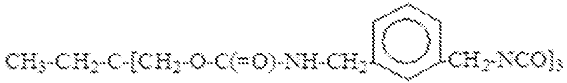

De préférence, le(s) polyisocyanate(s) est(sont) choisi(s) parmi les diisocyanates, préférentiellement parmi le toluène diisocyanate (en particulier l'isomère 2,4 TDI, l'isomère 2,6-TDI ou leurs mélanges), le 4,4'-diphénylméthanediisocyanate, le 2,4'-diphénylméthane diisocyanate, le méta-xylylène diisocyanate (m-XDI), l'isophorone diisocyanate (IPDI), et leurs mélanges.

De façon encore plus préférée, le polyisocyanate est choisi parmi le toluène diisocyanate (en particulier l'isomère 2,4 TDI, l'isomère 2,6-TDI ou leurs mélanges), et le diphénylméthane diisocyanate (MDI).

Le diphénylméthane diisocyanate peut se présenter sous la forme d'un unique isomère par exemple choisi parmi le 2,4'-MDI et le 4,4'-MDI, ou sous la forme d'un mélange d'isomères par exemple 2,4'-MDI et 4,4'-MDI. De préférence, le diphénylméthane diisocyanate, se présente sous la forme d'un mélange d'isomères comprenant plus de 50% en poids de l'isomère 4,4'-MDI, et moins de 50% en poids de l'isomère 2,4'-MDI, les pourcentages étant par rapport au poids total du diphénylméthane diisocyanate.

Le(s) polyisocyanate(s) utilisable(s) sont typiquement largement disponibles dans le commerce. A titre d'exemple, on peut citer le SCURANATE^{®} TX commercialisé par la société VENCOREX, correspondant à un 2,4-TDI de pureté de l'ordre de 95%, le SCURANATE^{®} T100 commercialisé par la société VENCOREX, correspondant à un 2,4-TDI de pureté supérieure à 99% en poids, le « DESMODUR^{®} I» commercialisé par la société COVESTRO, correspondant à un IPDI ou encore le DESMODUR^{®} N3300 » commercialisé par la société COVESTRO, correspondant à un isocyanurate de HDI, le « TAKENATE ^{™} 500 » commercialisé par MITSUI CHEMICALS correspondant à un m-XDI, le « TAKENATE ^{™} 600 » commercialisé par MITSUI CHEMICALS correspondant à un m-H6XDI, le « VESTANAT^{®} H12MDI » commercialisé par EVONIK correspondant à un H12MDI, ou le citer le « SUPRASEC 2004 » commercialisé par HUNSTMAN (mélange d'environ 70% en poids de monomère 4,4'-MDI et de 30% en poids de monomère 2,4'-MDI, ayant un pourcentage de NCO de 32,8%).

### Polyol(s)

Le(s) polyol(s) peut(vent) être choisi(s) parmi les polyester polyols, les polyéther polyols, les polyène polyols, les polycarbonate polyols, les poly(éther-carbonate) polyols, et leurs mélanges.

Le(s) polyol(s) utilisable(s) peu(ven)t être choisi(s) parmi les polyols aromatiques, les polyols aliphatiques, les polyols arylaliphatiques et les mélanges de ces composés.

Le(s) polyol(s) utilisé(s) selon l'invention peu(ven)t être choisi(s) parmi ceux dont la masse moléculaire moyenne en nombre (Mn) est supérieure ou égale à 400 g/mol, de préférence supérieure ou égale à 1 000 g/mol, préférentiellement supérieure ou égale à 3 000 g/mol, encore plus préférentiellement supérieure ou égale à 3 500 g/mol.

De préférence, leur fonctionnalité hydroxyle va de 2 à 6, préférentiellement de 2 à 3. La fonctionnalité hydroxyle est le nombre moyen de fonction hydroxyle par mole de polyol.

Selon un mode de réalisation particulier, l'indice hydroxyle de polyol(s) présentant une fonctionnalité hydroxyle de 2 est inférieure ou égale à 281 mg KOH/g, de préférence inférieure ou égale à 112 mg KOH/g, de préférence inférieure ou égale à 37 mg KOH/g, préférentiellement inférieure ou égale à 32 mg KOH/g.

Selon un mode de réalisation, l'indice hydroxyle de polyol(s) présentant une fonctionnalité hydroxyle de 3 est inférieure ou égale à 421 mg KOH/g, de préférence inférieure ou égale à 168 mg KOH/g, de préférence inférieure ou égale à 56 mg KOH/g, préférentiellement inférieure ou égale à 48 mg KOH/g.

Selon l'invention, le(s) polyester polyol(s) peut(vent) avoir une masse moléculaire moyenne en nombre allant de 1 000 g/mol à 10 000 g/mol.

Les polyester polyols peuvent être choisis parmi les polyester diols et les polyester triols, et de préférence parmi les polyester diols.

Parmi les polyester polyols, on peut par exemple citer :
- les polyesters polyols d'origine naturelle tel que l'huile de ricin ;
- les polyesters polyols résultant de la polycondensation :
   - d'un ou plusieurs polyols aliphatiques (linéaires, ramifiés ou cycliques) ou aromatiques tels que par exemple le monoéthylène glycol, le diéthylène glycol, le 1,2-propanediol, le 1,3-propanediol, le 1,4-butanediol, le butènediol, le 1,6-hexanediol, le cyclohexane diméthanol, le tricyclodécane diméthanol, le néopentyl glycol, le cyclohexane diméthanol, un polyéther polyol, le glycérol, le triméthylolpropane, le 1,2,6-hexanetriol, le sucrose, le glucose, le sorbitol, le pentaérythritol, le mannitol, la N-méthyldiéthanolamine, la triéthanolamine, un alcool gras dimère, un alcool gras trimère et leurs mélanges, avec
   - un ou plusieurs acide polycarboxylique ou son dérivé ester ou anhydride tel que l'acide 1,6-hexanedioïque (acide adipique), l'acide dodécanedioïque, l'acide azélaïque, l'acide sébacique, l'acide adipique, l'acide 1,18-octadécanedioïque, l'acide phtalique, l'acide isophtalique, l'acide téréphtalique, l'acide succinique, un acide gras dimère, un acide gras trimère et les mélanges de ces acides, un anhydride insaturé tel que par exemple l'anhydride maléique ou phtalique, ou une lactone telle que par exemple la caprolactone ;
- les estolides polyols résultant de la polycondensation d'un ou plusieurs hydroxyacides, tel que l'acide ricinoléïque, sur un diol (on peut par exemple citer les « POLYCIN^{®} D-1000 » et « POLYCIN^{®} D-2000 » disponibles chez VERTELLUS).

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 :
- le « TONE^{®} 0240 » (commercialisé par UNION CARBIDE) qui est une polycaprolactone de masse moléculaire moyenne en nombre d'environ 2000 g/mol, et un point de fusion de 50°C environ,
- le « DYNACOLL^{®} 7381 » (comercialisé par EVONIK) de masse moléculaire moyenne en nombre d'environ 3500 g/mol, et ayant un point de fusion de 65°C environ,
- le « DYNACOLL^{®} 7360 » (commercialisé par EVONIK) qui résulte de la condensation de l'acide adipique avec l'hexanediol, et a une masse moléculaire moyenne en nombre d'environ 3500 g/mol, et un point de fusion de 55°C environ,
- le « DYNACOLL^{®} 7330 » (commercialisé par EVONIK) de masse moléculaire moyenne en nombre d'environ 3500 g/mol, et ayant un point de fusion de 85°C environ,
- le « DYNACOLL^{®}7363 » (commercialisé par EVONIK) qui résulte également de la condensation de l'acide adipique avec l'hexanediol, et a une masse moléculaire moyenne en nombre d'environ 5500 g/mol, et un point de fusion de 57°C environ,
- le « DYNACOLL^{®} 7250 » (commercialisé par EVONIK) : polyester polyol ayant une viscosité de 180 Pa.s à 23°C, une masse moléculaire moyenne en nombre Mn égale à 5 500 g/mol, et une T_{g} égale à -50°C,
- le « KURARAY^{®} P-6010 » (commercialisé par KURARAY) : polyester polyol ayant une viscosité de 68 Pa.s à 23°C, une masse moléculaire moyenne en nombre Mn égale à 6 000 g/mol, et une T_{g} égale à -64°C,
- le « KURARAY^{®} P-10010 » (commercialisé par KURARAY) : polyester polyol ayant une viscosité de 687 Pa.s à 23°C, et une masse moléculaire moyenne en nombre Mn égale à 10 000 g/mol,
- le « REALKYD^{®} XTR 10410 » (commercialisé par la société CRAY VALLEY) : polyester polyol ayant de masse moléculaire moyenne en nombre Mn voisine de 1000 g/mol et dont l'indice hydroxyle va de 108 à 116 mg KOH/g. Il s'agit d'un produit issu de la condensation d'acide adipique, de diéthylèneglycol et de monoéthylèneglycol,
- le « DEKATOL^{®} 3008 » (commercialisé par la société BOSTIK) de masse molaire moyenne en nombre Mn voisine de 1060 g/mol et dont l'indice hydroxyle va de 102 à 112 mg KOH/g. Il s'agit d'un produit issu de la condensation d'acide adipique, de diéthylèneglycol et de monoéthylèneglycol.

De préférence, les polyester polyols ne sont pas des polyesters dérivés d'huiles animales ou d'huiles végétales.

De préférence, les polyester polyols ne sont pas des dérivés de triglycérides.

De préférence, les polyester polyols ont une masse moléculaire moyenne en nombre supérieure à 2 000 g/mol, préférentiellement supérieure ou égale à 3 000 g/mol, avantageusement supérieure ou égale à 3 500 g/mol, et en particulier supérieure ou égale à 4 000 g/mol.

Selon l'invention, le(s) polyéther polyol(s) peut(vent) avoir une masse moléculaire moyenne en nombre allant de 400 à 20 000 g/mol, de préférence de 1 000 à 12 000 g/mol, de préférence 1 000 à 8 000 g/mol.

Le(s) polyéther polyol(s) utilisable(s) selon l'invention est (sont) de préférence choisi(s) parmi les polyoxyalkylène polyols, dont la partie alkylène, linéaire ou ramifiée, comprend de 1 à 4 atomes de carbone, plus préférentiellement de 2 à 3 atomes de carbone.

Plus préférentiellement, le(s) polyéther polyol(s) utilisable(s) selon l'invention est (sont) de préférence choisi(s) parmi les polyoxyalkylène diols ou polyoxyalkylène triols, dont la partie alkylène, linéaire ou ramifiée, comprend de 1 à 4 atomes de carbone, plus préférentiellement de 2 à 3 atomes de carbone.

A titre d'exemple de polyoxyalkylène diols ou triols utilisables selon l'invention, on peut citer :
- les polyoxypropylène diols ou triols (aussi désignés par polypropylène glycol (PPG) diols ou triols) ayant une masse moléculaire moyenne en nombre (Mn) allant de 400 à 20 000 g/mol ;
- les polyoxyéthylène diols ou triols (aussi désignés par polyéthylène glycol (PEG) diols ou triols) ayant une masse moléculaire moyenne en nombre (Mn) allant de 400 à 20 000 g/mol;
- et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer :
- « VORANOL^{®} P1010 » commercialisé par la société DOW de masse moléculaire moyenne en nombre (Mn) voisine de 1 020 g/mol et dont l'indice hydroxyle est d'environ 110 mg KOH/g ;
- le VORANOL ^{®} EP 1900 : commercialisé par la société DOW, PPG difonctionnel de masse moléculaire moyenne en nombre d'environ 4 008 g/mol, et d'indice hydroxyle I_{OH} égal à 28 mg KOH/g ;
- l'ACCLAIM ^{®} 4200 : PPG difonctionnel de masse moléculaire moyenne en nombre d'environ 4 000 g/mol, et d'indice hydroxyle I_{OH} égal à 28 mg KOH/g ;
- l'ACCLAIM ^{®} 8200 : PPG difonctionnel de masse moléculaire moyenne en nombre de 8 016 g/mol, et d'indice hydroxyle I_{OH} égal à 14 mg KOH/g ;
- l'ACCLAIM ^{®} 12200 : PPG difonctionnel de masse moléculaire moyenne en nombre de 11 222 g/mol, et d'indice hydroxyle I_{OH} égal à 10 mg KOH/g ;
- l'ACCLAIM ^{®} 18200 : PPG difonctionnel de masse moléculaire moyenne en nombre de 17 265 g/mol, et d'indice hydroxyle I_{OH} égal à 6,5 mg KOH/g.

A titre d'exemple de polyéther triol, on peut citer le polyoxypropylène triol commercialisé sous la dénomination « VORANOL^{®} CP 450 » par la société DOW, de masse moléculaire moyenne en nombre (Mn) voisine de 450 g/mol et dont l'indice hydroxyle va de 370 à 396 mg KOH/g, ou le polyoxypropylène triol commercialisé sous la dénomination « VORANOL^{®} CP3355 » par la société DOW, de masse moléculaire moyenne en nombre voisine de 3 554 g/mol, ou l'« ACCLAIM ^{®} 6300 » qui est un PPG trifonctionnel de masse moléculaire moyenne en nombre d'environ 5 948 g/mol, et d'indice hydroxyle I_{OH} égal à 28,3 mg KOH/g.

Le(s) polyène polyol(s) utilisable(s) selon l'invention peu(ven)t être choisi(s) de préférence parmi les polyènes comportant des groupes hydroxyles terminaux, et leurs dérivés correspondants hydrogénés ou époxydés.

De préférence, le(s) polyène polyol(s) utilisable(s) selon l'invention est (sont) choisi(s) parmi les polybutadiènes comportant des groupes hydroxyles terminaux, éventuellement hydrogénés ou époxydés. Préférentiellement, le(s) polyène polyol(s) utilisable(s) selon l'invention est (sont) choisi(s) parmi les homopolymères et copolymères de butadiène comportant des groupes hydroxyles terminaux, éventuellement hydrogénés ou époxydés.

Dans le cadre de l'invention, et sauf mention contraire, on entend par « groupes hydroxyles terminaux » d'un polyène polyol, les groupes hydroxyles situés aux extrémités de la chaîne principale du polyène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémiosélective des doubles liaisons de la chaîne principale d'un polyène comportant des groupes hydroxyles terminaux, et comportent donc au moins un groupe époxy dans sa chaîne principale.

A titre d'exemples de polyène polyols, on peut citer les homopolymères de butadiène, saturé ou insaturé, comprenant des groupes hydroxyles terminaux, éventuellement époxydés, tels que par exemple ceux commercialisés sous la dénomination « POLY BD^{®} ou KRASOL^{®} » par la société CRAY VALLEY.

Les polycarbonate polyols peuvent être choisis parmi les polycarbonate diols ou triols, ayant en particulier une masse moléculaire moyenne en nombre (Mₙ) allant de 400 à 20 000 g/mol.

A titre d'exemple de polycarbonate diol, on peut citer :
- le « CONVERGE^{®} POLYOL 212-10 » et « CONVERGE^{®} POLYOL 212-20 » commercialisés par la société NOVOMER respectivement de masse moléculaire en nombre (Mₙ) égales à 1 000 et 2 000 g/mol dont les indices hydroxyles sont respectivement de 112 et 56 mg KOH/g,
- les « POLYOL C-590, C1090, C-2090 et C-3090 » commercialisés par KURARAY ayant une masse moléculaire en nombre (Mₙ) allant de 500 à 3 000 g/mol et un indice hydroxyle allant de 224 à 37 mg KOH/g.

Selon un mode de réalisation préféré, les polyols ne sont pas des polyesters. Ce mode de réalisation permet avantageusement de conduire à des collages (après réticulation de la composition) possédant de meilleures propriétés de résistance à l'hydrolyse par rapport à des compositions issues de polyesters.

De préférence, les polyols comprennent au moins un polyéther polyol, préférentiellement les polyols sont uniquement choisis parmi les polyéther polyols.

### Amine de formule (I) ou formule (II)

Dans la formule (I) susmentionnée, v vaut de préférence 1, et R¹ est de préférence en position para.

Les amines de formule (I) sont de préférence choisies parmi celles dans lesquelles :
- R¹ représente un alkyle, linéaire ou ramifié, saturé ou insaturé, comprenant de 1 à 20 atomes de carbone, de préférence de 1 à 10 atomes de carbone, préférentiellement R¹ représente méthyle ;
- m et n représentent, indépendamment l'un de l'autre, un nombre entier allant de 1 à 18, de préférence de 1 à 9, avantageusement de 1 à 5 ;
- R² et R³ représentent, indépendamment l'un de l'autre, un atome d'hydrogène ou un groupe alkyle, linéaire ou ramifié, comprenant de 1 à 12 atomes de carbone, ledit groupe alkyle étant éventuellement interrompu par au moins un atome d'oxygène, de préférence R² et R³ représente chacun un atome d'hydrogène ;
- avec m + n > 2, de préférence n + m ≥ 2,5.

De préférence, les amines de formule (I) sont celles dans lesquelles :
- R¹ représente un alkyle, linéaire ou ramifié, comprenant de 1 à 5 atomes de carbone, préférentiellement R¹ représente méthyle ;
- m et n représentent, indépendamment l'un de l'autre, un nombre entier allant de 1 à 18, de préférence de 1 à 9, avantageusement de 1 à 5 ;
- R² et R³ représentent un atome d'hydrogène ;
- avec que m + n > 2, de préférence n + m ≥ 2,5.

Selon un mode de réalisation, l'étape E1) est réalisée en présence d'un mélange d'amines de formule (I) différentes.

Parmi les amines de formule (I), on peut par exemple citer la « BISOMER^{®} PTE » (numéro CAS : 878391-30-1) commercialisée par GEO SPECIALITY CHEMICALS, le « Accelerator PT25E » (numéro CAS : 878391-30-1) commercialisé par LANXESS, la N,N-Bis(2-hydroxypropyl)-p-aniline (numéro CAS : 3077-13-2) disponible chez BIOSYNTH, la N,N-Bis(2-hydroxypropyl)-p-toluidine (numéro CAS : 38668-48-3) commercialisée par BASF, le « ETHOX ANA-10 » (numéro CAS : 36356-83-9) disponible chez ETHOX CHEMICAL.

Dans la formule (II) susmentionnée, v vaut de préférence 1, et R¹ est de préférence en position para.

Les amines de formule (II) sont de préférence choisies parmi celles dans lesquelles :
- R¹ représente un alkyle, linéaire ou ramifié, saturé ou insaturé, comprenant de 1 à 20 atomes de carbone, de préférence de 1 à 10 atomes de carbone, préférentiellement R¹ représente méthyle ;
- r représente un nombre entier allant de 1 à 36, de préférence de 1 à 18, avantageusement de 1 à 10 ;
- R³ représente un atome d'halogène, un atome d'hydrogène ou un groupe alkyle, linéaire ou ramifié, comprenant de 1 à 12 atomes de carbone, ledit groupe alkyle étant éventuellement interrompu par au moins un atome d'oxygène,
- R⁴ représente un atome d'hydrogène, un groupe arylalkyle, ou un groupe alkyle, linéaire ou ramifié, comprenant de 1 à 20 atomes de carbone, de préférence de 1 à 6 atomes de carbone.

Parmi les amines de formule (II), on peut par exemple citer la N-(2-hydroxyéthyl)-N-méthyl aniline (numéro CAS : 93-90-3) disponible chez SIGMA-ALDRICH et la N-(2-hydroxyéthyl)-N-méthyl-p-toluidine (MHPT, numéro CAS : 2842-44-6) disponible chez PARCHEM.

De préférence, l'étape E1) susmentionnée est réalisée en présence d'amine(s) de formule (I).

### Monomère(s) M

Le monomère M peut être choisi parmi :
- les monomères M1 ayant la formule (III) suivante :

   CH₂=CH-R^{t}-OH (III)

   dans laquelle R^{t} représente un radical alkylène linéaire ou ramifié comprenant de 1 à 9 atomes de carbone, de preference de 1 à 4 atomes de carbone ; ou
- les monomères M2 ayant la formule (IV) suivante :

   CH₂=C(R⁶)-C(=O)-O-R⁷-OH (IV)
dans laquelle :
- R⁶ représente un hydrogène ou un méthyle ;
- R⁷ représente un radical hydrocarboné divalent linéaire ou ramifié, aliphatique ou cyclique, saturé ou insaturé, comprenant de préférence de 2 à 240 atomes de carbone, et étant éventuellement interrompu par un ou plusieurs hétéroatomes (tel que par exemple N, O, S, et en particulier O), et/ou éventuellement interrompu par un ou plusieurs groupes aromatiques, et/ou éventuellement interrompu par un ou plusieurs groupes divalents - N(Rₐ)- avec Rₐ représentant un radical alkyle linéaire ou ramifié comprenant de 1 à 22 atomes de carbone (amine tertiaires), -C(=O)O- (ester), -C(=O)NH- (amide), -NHC(=O)O-(carbamate), -NHC(=O)-NH- (urée), ou -C(=O)- (carbonyle), et/ou étant éventuellement substitué.

Parmi les monomères M1, on peut par exemple citer ceux de formule (III) susmentionnée dans laquelle R^{t} représente un méthylène, un éthylène ou un propylène.

De préférence, le monomère M2 a l'une des formules suivantes :
- Formule (IV-1):

   CH₂=C(R⁶)-C(=O)-O-R⁷-OH (IV-1)

   dans laquelle :
   - R⁶ est tel que défini précédemment ;
   - R⁷ représente un radical alkylène divalent linéaire ou ramifié, aliphatique ou cyclique, saturé ou insaturé, comprenant de 2 à 22 atomes de carbone, de préférence de 2 à 18, préférentiellement de 2 à 14, encore plus préférentiellement de 2 à 10, et avantageusement de 2 à 6 atomes de carbone ;
- Formule (IV-2):

   CH₂=C(R⁶)-C(=O)-O-R⁸-O-[C(=O)-(CH₂)_{w}-O]ₛ-H (IV-2)

   dans laquelle :
   - R⁶ est tel que défini précédemment ;
   - w est un nombre entier allant de 1 à 10, de préférence de 1 à 5, et préférentiellement w est égal à 5 ;
   - s est un nombre entier allant de 1 à 10, s étant de préférence égal à 2 ;
   - R⁸ représente un radical alkylène divalent linéaire ou ramifié, aliphatique ou cyclique, saturé ou insaturé, comprenant de 2 à 22 atomes de carbone, de préférence de 2 à 18, préférentiellement de 2 à 14, encore plus préférentiellement de 2 à 10, et avantageusement de 2 à 6 atomes de carbone ;
- Formule (IV-3):

   CH₂=C(R⁶)-C(=O)-O-[R⁹-O]ₜ-H (IV-3)
dans laquelle :
- R⁶ est tel que défini précédemment ;
- R⁹ représente un radical alkylène divalent linéaire ou ramifié, aliphatique ou cyclique, saturé ou insaturé, comprenant de 2 à 4 atomes de carbone, t est un nombre entier allant de 2 à 120, de préférence de 1 à 10, t étant de préférence égal à 2 ou 3.

Parmi les monomères de formule (IV-1), on peut citer par exemple le 2-hydroxyéthyl acrylate (HEA), le 2-hydroxyéthyl méthacrylate (HEMA), le 2-hydroxypropyl acrylate (HPA), le 2-hydroxypropyl méthacrylate, le 4-hydroxybutyl acrylate (4-HBA), le 4-hydroxybutyl méthacrylate, le 2-hydroxybutyl acrylate (HBA), le 2-hydroxybutyl méthacrylate (par exemple disponibles chez SARTOMER, COGNIS ou BASF).

Parmi les monomères de formule (IV-2) ci-dessus, on peut citer par exemple le polycaprolactone acrylate SR 495B (CAPA) disponible chez SARTOMER ou le hydroxyéthylcaprolactone acrylate (HECLA) disponible chez BASF.

Parmi les dérivés éthoxylés et/ou propoxylés de l'acide acrylique de formule (II-3) susmentionée, on peut par exemple citer le BLEMMER ^{®} AP-150, le BLEMMER ^{®} AP-200, le BLEMMER ^{®} AP-400, le BLEMMER ^{®} AP-550, le BLEMMER ^{®} AP-800, le BLEMMER ^{®} AP-1000, le BLEMMER ^{®} AE-90, le BLEMMER ^{®} AE-150, le BLEMMER ^{®} AE-200, le BLEMMER ^{®} AE-350, le BLEMMER ^{®} AE-400, commercialisés par NIPPON OIL & FATS CORPORATION, ou encore le SR 604 de chez SARTOMER.

De préférence, le monomère M est un monomère M2.

De façon encore plus préférée, le monomère M a la formule (IV-1) susmentionée, et en particulier l'une des formules (IV-1-1), (IV-1-2) ou (IV-1-3) suivantes :
- (IV-1-1) : 2-hydroxyéthylacrylate (HEA):

   CH₂=CH-C(=O)-O-CH₂CH₂OH
- (IV-1-2): 2-hydroxypropylacrylate (HPA) :

   CH₂=CH-C(=O)-O-CH₂CH(Me)-OH
- (IV-1-3): 2-hydroxyéthylméthacrylate(HEMA).

   CH₂=CH(Me)-C(=O)-O-CH₂-CH₂-OH

### Etape E1)

La réaction de polyaddition E1) peut être mise en œuvre à une température de préférence inférieure à 95°C et/ou dans des conditions de préférence anhydres.

La réaction de polyaddition peut être mise en œuvre en présence ou non d'au moins un catalyseur.

Le(s) catalyseur(s) de réaction utilisable(s) au cours de la réaction de polyaddition peu(ven)t être tout catalyseur connu de l'homme du métier pour catalyser la formation de polyuréthane par réaction d'au moins un polyisocyanate avec au moins un polyol.

Une quantité allant jusque 0,3% en poids de catalyseur(s) par rapport au poids du milieu réactionnel de l'étape de polyaddition peut être utilisée.

La réaction de polyaddition E1) peut être mise en œuvre en présence ou non d'au moins un solvant. Le solvant peut être choisi parmi les solvants ne réagissant pas avec les fonctions réactives des ingrédients utilisés dans l'étape E1). Il peut par exemple s'agir du méthacrylate de méthyle, du toluène, de l'acétate d'éthyle, du xylène, et de leurs mélanges.

L'étape E1) est de préférence mise en œuvre dans des quantités de réactifs telles que le rapport molaire NCO/OH (r1) va de 1,5 à 5, de préférence de 1,5 à 2,5.

Dans le cadre de l'invention, et sauf mention contraire, (r1) est le rapport molaire NCO/OH correspondant au rapport molaire du nombre de groupes isocyanates (NCO) sur le nombre de groupes hydroxyles (OH) portés par respectivement par l'ensemble du(des) polyisocyanate(s) et l'ensemble du(des) alcool(s) présents dans le milieu réactionnel de l'étape E1) (polyol(s), amine(s) de formule (I) ou (II)).

### Etape E2)

L'étape E2) peut être mise en œuvre à une température de préférence inférieure à 95°C et/ou dans des conditions de préférence anhydres.

L'étape E2) peut être mise en œuvre en présence ou non d'au moins un catalyseur. Il peut s'agir du même catalyseur que celui utilisé dans l'étape E1).

L'étape E2) peut être mise en œuvre en présence ou non d'au moins un solvant. Le solvant peut être choisi parmi les solvants ne réagissant pas avec les fonctions réactives des ingrédients utilisés dans l'étape E2). Il peut par exemple s'agir du méthacrylate de méthyle, du toluène, de l'acétate d'éthyle, du xylène, et de leurs mélanges.

De préférence, l'étape E2) est mise en œuvre par ajout du(des) monomère(s) M dans le milieu réactionnel de l'étape E1), sans isolation du produit formé à l'étape E1).

L'étape E2) est de préférence mise en œuvre dans des quantités de réactifs telles que le rapport molaire OH/NCO (r2) est inférieur ou égal à 1, préférentiellement va de 0,90 à 1,00, et encore plus préférentiellement va de 0,95 à 1,00.

Dans le cadre de l'invention, et sauf mention contraire, (r2) est le rapport molaire OH/NCO correspondant au rapport molaire du nombre de groupes hydroxyles (OH) sur le nombre de groupes isocyanates (NCO) portés respectivement par l'ensemble du(des) alcool(s), et des isocyanate(s) (s'agissant notamment du polyuréthane à terminaisons NCO et éventuellement le(s) polyisocyanate(s) non réagi(s) à l'issue de l'étape E1)) présents dans le milieu réactionnel de l'étape E2).

### Polymère P

La présente invention concerne également un polyuréthane P obtenu selon le procédé susmentionné.

Le polyuréthane comprend de préférence de 0,5 % à 10 %, préférentiellement de 1 % à 5% en poids d'unités dérivées de l'amine de formule (I) ou (II) susmentionnées, de préférence de l'amine de formule (I).

Le polyuréthane peut avoir une masse moléculaire moyenne en nombre (Mn) allant de 1 000 à 30 000 g/mol, de préférence de 10 000 à 20 000 g/mol.

De préférence, le polyuréthane P est un polyuréthane à terminaisons (méth)acrylate ou allylique, préférentiellement à terminaisons (méth)acrylate.

Le polymère P peut avoir une viscosité à 70°C allant de 5 000 mPa.s à 50 000 mPa.s, de préférence allant de 10 000 mPa.s à 35 000 mPa.s.

L'utilisation d'un tel polymère P selon l'invention permet avantageusement de faciliter la formulation de composition, et d'éviter des étapes supplémentaires de solubilisation par utilisation supplémentaire de solvants, diluants...

La présente invention concerne également l'utilisation d'un polyuréthane P tel que défini ci-dessus comme amorceur de polymérisation radicalaire, notamment dans des compositions (méth)acryliques.

### Composition

La présente invention concerne également une composition comprenant :
- une composition A comprenant :
   - au moins un polymère P tel que décrit ci-dessus ; et
   - au moins un monomère vinylique ;
- une composition B comprenant :
   - au moins un peroxyde ; et
   - éventuellement au moins un monomère vinylique.

De préférence, la composition B comprend au moins un monomère vinylique.

Les monomères vinyliques dans la composition A et dans la composition B peuvent être identiques ou différents.

Le terme « monomère vinylique » est bien connu et s'entend d'un monomère ayant la formule suivante :

R'-C(R")=CH₂

Les monomères vinyliques peuvent être choisis parmi les monomères (méth)acrylates (incluant notamment les cyanoacrylates) ; les dérivés *N*-vinylhétérocycliques tels que la *N*-vinylpyrrolidone, le *N*-vinylcaprolactame, le *N*-vinylimidazole ; les dérivés vinyl aromatiques tels que le styrène, α-méthylstyrène et les isomères de vinyl toluène ; les esters vinyliques d'acides carboxyliques aliphatiques en C1 à C20 atomes, par exemple l'acétate de vinyle, le propionate de vinyle, le butyrate de vinyle, l'hexanoate de vinyle, le laurate de vinyle, le stéarate de vinyle et le versatate de vinyle ; et leurs mélanges.

De préférence, les monomères vinyliques sont choisis parmi les monomères (méth)acrylates.

Le(s) monomère(s) (méth)acrylate(s) peut(vent) être choisi(s) dans le groupe constitué :
- des composés ayant la formule (V) suivante :

   CH₂=C(R¹⁰)-COOR¹¹ (V)

   dans laquelle :
   - R¹⁰ représente un hydrogène, un halogène, un groupe CN, ou un groupe alkyle comprenant de 1 à 4 atomes de carbone ;
   - R¹¹ est choisi dans le groupe constitué des alkyles, des cycloalkyles, des alcényles, des cycloalcényles, des alkylaryles, des arylalkyles ou des aryles, lesdits alkyles, des cycloalkyles, des alcényles, des cycloalcényles, des alkylaryles, des arylalkyles ou des aryles pouvant être éventuellement substitués et/ou interrompus par au moins un silane, un silicone, un oxygène, un halogène, un carbonyle, un hydroxyle, un ester, une urée, un uréthane, un carbonate, une amine, une amide, un soufre, un sulfonate, ou un sulfone ;
- des polyéthylène glycol di(méth)acrylates ;
- des tétrahydrofurane (méth)acrylates ;
- de l'hydroxypropyl (méth)acrylate ;
- de l'hexanediol di(méth)acrylate ;
- du triméthylol propane tri(méth)acrylate ;
- du diéthylèneglycol diméthacrylate ;
- du triéthylène glycol diméthacrylate ;
- du tétraéthylène glycol diméthacrylate ;
- du dipropylène glycol diméthacrylate ;
- du di-(pentaméthylène glycol diméthacrylate ;
- du tétraéthylène glycol diacrylate ;
- du diglycérol tétraméthacrylate ;
- du tétraméthylène diméthacrylate ;
- de l'éthylène diméthacrylate ;
- du néopentyl glycol diacrylate ;
- du triméthylol propane triacrylate ;
- des bisphénol A mono- et di(méth)acrylates ;
- des bisphénol F mono- et di(méth)acrylates; et
- de leurs mélanges.

Selon un mode de réalisation, le monomère (méth)acrylate est choisi parmi le 2-cyanoacrylate de méthyle, le 2-cyanoacrylate d'éthyle, le 2-cyanoacrylate de butyle, le 2-cyanoacrylate d'octyle, le 2-cyanoacrylate de 2-methoxyethyl, le 2-cyanoacrylate de 2-ethoxyethyl, le (méth)acrylate de méthyle, le (méth)acrylate d'éthyle, le (méth)acrylate de 2-éthylhexyle, le (méth)acrylate d'heptyle, le (méth)acrylate de 2-tert-butylheptyle, le (méth)acrylate d'octyle, le (méth)acrylate de 3-isopropylheptyle, le (méth)acrylate de nonyle, le (méth)acrylate de décyle, le (méth)acrylate d'undécyle, le (méth)acrylate de 5-méthylundécyle, le (méth)acrylate de dodécyle, le (méth)acrylate de 2-méthyldodécyle, le (méth)acrylate de tridécyle, le (méth)acrylate de 5-méthyltridécyl, le (méth)acrylate de tétradécyle, le (méth)acrylate de pentadécyle, le (méth)acrylate d'hexadécyle, le (méth)acrylate de 2-méthylhexadécyle, le (méth)acrylate d'heptadécyl, le (méth)acrylate de 5-isopropylheptadécyle, le (méth)acrylate de 4-tert-butyloctadécyle, le (méth)acrylate de 5-éthyloctadécyle, le (méth)acrylate de 3-isopropyloctadécyle, le (méth)acrylate d'octadécyle, le (méth)acrylate de nonadécyle, le (méth)acrylate d'eicosyle, le (méth)acrylate de 3-vinylcyclohexyle, le (méth)acrylate de bornyle, le (méth)acrylate de 2,4,5-tri-t-butyl-3-vinylcyclohexyle, le (méth)acrylate de 2,3,4,5-tétra-t-butylcyclohexyle; le (méth)acrylate de benzyle, le (méth)acrylate de phényle, le 2-(2-éthoxyéthoxy)éthyl (méth)acrylate, le (méth)acrylate de 2-phénoxyéthyle, et leurs mélanges.

De préférence, le monomère (méth)acrylate est choisi parmi les composés de formule (V) susmentionnée. Préférentiellement, les composés de formule (V) sont ceux dans laquelle :
- R¹⁰ représente un hydrogène, ou un groupe alkyle comprenant de 1 à 4 atomes de carbone ;
- R¹¹ représente un groupe alkyle, comprenant de préférence de 1 à 20 atomes de carbone, de préférence de 1 à 10 atomes de carbone.

Encore plus préférentiellement, le monomère (méth)acrylate est le méthacrylate de méthyle.

Le peroxyde est notamment utilisé comme initiateur de polymérisation radicalaire.

Le peroxyde peut être choisi parmi les peroxydes organiques, les peroxydes inorganiques, et leurs mélanges.

Parmi les peroxydes inorganiques, on peut citer l'acide peroxydisulfurique et leurs sels, tels que le peroxodisulfate d'ammonium, le peroxodisulfate de sodium et le peroxodisulfate de potassium.

Parmi les peroxides oganiques, on peut citer l'hydroperoxyde de cumène, l'hydroperoxyde de para-menthane, le peroxyisobutyrate de *tert*-butyle, le peroxybenzoate de *tert*-butyle, le peroxynéodécanoate de *tert*-butyle, le peroxypivalate de *tert*-amyle, le peroxyde d'acétyle, le peroxyde de benzoyle, le peroxyde de dibenzoyle, le 1,3-bis-(t-butylperoxyisopropyl)benzène, le diacétyl peroxyde, le t-butylcumyl peroxyde, le peroxyacétate de *tert*-butyle, le peroxyde de cumyle, le 2,5-diméthyl-2,5-di-t-butylperoxyhexane, le 2,5-diméthyl-2,5-di-t-butyl-peroxyhex-3-yne, le 4-méthyl-2,2-di-t-butylperoxypentane, et leurs mélanges.

De préférence, la composition B comprend le peroxyde de benzoyle.

Le ratio molaire fonction peroxyde/ fonction amine de formule (I) contenu dans le polyuréthane P peut aller de 0,3 à 1,5.

La composition selon l'invention peut comprendre au moins un additif choisi dans le groupe constitué des catalyseurs, des charges, des antioxydants, des stabilisants à la lumière/ absorbeurs d'UV, des désactivateurs de métaux, des antistatiques, des agents antivoile, des agents moussants, des biocides, des plastifiants, des lubrifiants, des émulsifiants, des colorants, des pigments, des agents rhéologiques, des modificateurs d'impact, des promoteurs d'adhésion, des azurants optiques, des ignifugeants, des agents anti-suintement, des agents de nucléation, des solvants, et de leurs mélanges.

Ces additifs peuvent être présents dans la composition A et/ou la composition B de la composition selon l'invention.

A titre d'exemple d'agent plastifiant utilisable, on peut utiliser n'importe quel agent plastifiant habituellement utilisé dans le domaine des compositions adhésives.

De préférence, on utilise :
- le diisodecyl phtalate, tel que par exemple commercialisé sous le nom PALATINOL^{™} DIDP par la Société BASF,
- un ester d'acide alkylsulphonique et de phénol, tel que par exemple commercialisé sous le nom MESAMOLL^{®} par la société LANXESS,
- le diisononyl-1,2-cyclohexanedicarboxylate, tel que par exemple commercialisé sous le nom HEXAMOLL DINCH^{®} par la société BASF,
- le tétravalérate de pentaérythritol, tel que par exemple commercialisé sous le nom PEVALEN^{™} par la Société PERSTORP.

A titre d'exemple d'agent(s) de rhéologie utilisable(s), on peut citer n'importe quel agent de rhéologie habituellement utilisé dans le domaine des compositions adhésives.

De préférence, les agents thixotropiques sont choisis parmi :
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée, telle que par exemple vendu sous la dénomination HDK^{®} N20 par la société Wacker ;
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172 ;
- les cires d'amides micronisées, tel que le CRAYVALLAC SLX commercialisé par Arkema.

La composition A peut éventuellement comprendre au moins un oligomère uréthane-acrylate aliphatique.

Il peut par exemple s'agir du CN925^{®} (uréthane-acrylate tétrafonctionnel aliphatique ayant une Mn d'environ 2500 g/mol), du CN 9245S^{®} (uréthane-acrylate trifonctionnel aliphatique ayant une Mn d'environ 5 000 g/mol), du CN981^{®} (uréthane-acrylate ayant une masse moléculaire moyenne en nombre (Mn) d'environ 2 000 g/mol) ou le CN9400^{®} (uréthane-allylique de fonctionnalité 6 ayant une masse moléculaire moyenne en nombre (Mn) d'environ 4 000 g/mol) commercialisés par Sartomer.

Selon un mode de réalisation, le ratio volumique composition A/composition B va de 100/5 à 1/1, de préférence de 10/1 à 1/1.

Selon un mode de réalisation préféré, la composition susmentionnée comprend :
- une composition A comprenant :
   - de 1% à 30%, de préférence de 5 % à 20 % en poids de polymère(s) P tel(s) que décrit(s) ci-dessus ; et
   - de 20 % à 90 %, de préférence de 40 % à 70 % en poids de monomère(s) (méth)acrylate ;
   par rapport au poids total de la composition A ;
- une composition B comprenant :
   - de 20 % à 80 %, de préférence de 30 % à 70 % en poids d'au moins un peroxyde ; et
   - éventuellement de 20% à 90% en poids de monomère(s) (méth)acrylate ; par rapport au poids total de la composition B.

De préférence, la composition selon l'invention est une composition adhésive.

### Kit prêt à l'emploi

La présente invention concerne également un kit prêt à l'emploi, comprenant la composition A telle que définie ci-dessus d'une part et la composition B telle que définie ci-dessus d'autre part, conditionnées dans deux compartiments séparés. Il peut par exemple s'agir d'une cartouche bicomposante.

En effet, la composition selon l'invention peut se trouver sous une forme bicomposante, par exemple au sein d'un kit prêt à l'emploi, comprenant la composition A d'une part dans un premier compartiment ou fût et la composition B d'autre part dans un second compartiment ou fût, dans des proportions adaptées pour un mélange direct des deux composants, par exemple à l'aide d'une pompe doseuse.

Selon un mode de réalisation de l'invention, le kit comprend en outre un ou plusieurs moyens permettant le mélange des compositions A et B. De préférence, les moyens de mélange sont choisis parmi des pompes doseuses, des mélangeurs statiques de diamètre adapté aux quantités utilisées.

### Utilisations des compositions

La présente invention concerne également l'utilisation d'une composition telle que définie ci-dessus, comme adhésif, mastic ou revêtement, de préférence comme adhésif.

L'invention concerne également l'utilisation de ladite composition pour la réparation et/ou le collage structural ou semi-structural de matériaux dans le domaine du transport, automobile (voiture, bus ou camion), de la marine, ou de la construction.

La présente invention concerne également un procédé d'assemblage de deux substrats par collage, comprenant :
- l'enduction sur au moins un des deux substrats à assembler d'une composition obtenue par mélange des compositions A et B telles que définies précédemment; puis
- la mise en contact effective des deux substrats ;
- la réticulation de la composition.

L'étape de réticulation peut être mise en oeuvre à une température comprise entre 0°C et 200°C, de préférence entre 10°C et 150°C, de préférence entre 23 et 80°C et en particulier entre 20°C et 25°C.

La réticulation peut également être induite à l'aide des micro-ondes.

Les substrats appropriés sont, par exemple, des substrats inorganiques tels que le béton, les métaux ou les alliages (comme les alliages d'aluminium, l'acier, les métaux non-ferreux et les métaux galvanisés) ; ou bien des substrats organiques comme le bois, des plastiques comme le PVC, le polycarbonate, le PMMA, le polyéthylène, le polypropylène, les polyesters, les résines époxy ; les substrats en métal et les composites revêtus de peinture.

Les compositions selon l'invention sont avantageusement peu toxiques en raison de l'incorporation des amines de formule (I) ou (II) dans le polyuréthane. Cette incorporation permet avantageusement de conduire à des adhésifs ayant de bonnes propriétés d'adhésion.

Les compositions selon l'invention conduisent avantageusement à une cinétique de réaction ayant un exotherme contrôlé, et notamment inférieur à 100°C, ce qui permet d'éviter l'endommagement des substrats collés et/ou de maintenir un bon aspect visuel.

Les compositions selon l'invention ont avantageusement un temps de réticulation similaire à celui des compositions comprenant des anilines substituées libres (c'est-à-dire non incorporées dans un polymère).

Les compositions selon l'invention conduisent avantageusement à des produits réticulés ayant de bonnes propriétés d'élongation, en raison notamment du polyuréthane initialement contenu dans les compositions. L'utilisation de tels polymères conduit avantageusement à des produits réticulés tels que des adhésifs, moins cassants et plus résistants aux chocs, et donc utilisables dans des applications variées.

Tous les modes de réalisation décrits ci-dessus peuvent être combinés les uns avec les autres. En particulier, les différents constituants susmentionnés de la composition, et notamment les modes préférés, de la composition peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

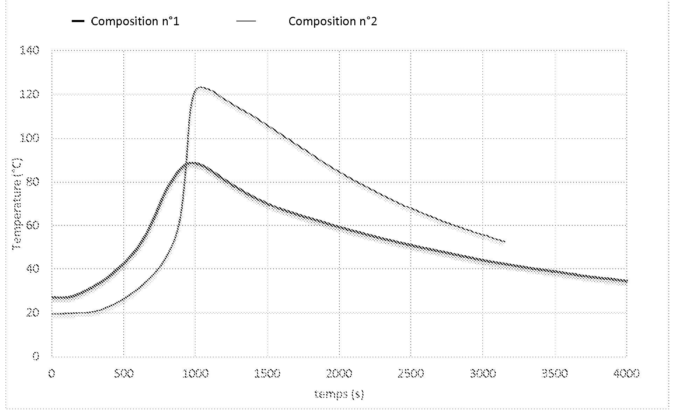

La figure 1 décrit la cinétique de réaction de la composition n°1 selon l'invention et de la composition n°2 comparative. L'axe des ordonnées correspond à la température en degré Celsius, tandis que l'axe des abscisses correspond au temps en secondes.

L'invention est à présent décrite dans les exemples de réalisation suivants qui sont donnés à titre purement illustratif, et ne sauraient être interprétés pour en limiter la portée.

### PARTIE EXPERIMENTALE

Les ingrédients suivants ont été utilisés :
- SUPRASEC 2004 commercialisé par HUNTSMAN est un diphénylméthane diisocyanate (MDI) comprenant environ 70% en poids de monomère 4,4'-MDI et environ 30% en poids de monomère 2,4'-MDI, de fonctionnalité 2 et ayant une viscosité de 15 mPa/s à 25°C et un pourcentage de NCO de 32.8% ;
- 2-hydroxyéthyl acrylate (HEA) commercialisé par BASF ;
- 2-hydroxyéthyl méthacrylate (HEMA) commercialisé par BASF ;
- SCURANATE^{®} T100 commercialisé par la société VENCOREX et correspondant à un mélange d'isomères de TDI comprenant au moins 99% en poids d'isomère 2,4-TDI. Son pourcentage de NCO est de 48,1% ;
- VORANOL^{™} P1000 commercialisé par la société DOW est un Polypropylène Glycol (PPG) de fonctionnalité F = 2 ayant un IOH de 112 mg KOH/g ;
- BORCHI KAT^{®} 315 : catalyseur à base de néodécanoate de bismuth (disponible auprès de la société Borchers) ;
- ACCLAIM ^{®} 4200 commercialisé par COVESTRO est un PPG difonctionnel de masse moléculaire moyenne en nombre d'environ 4 000 g/mol, et d'indice hydroxyle I_{OH} égal à 28 mg KOH/g ;
- ACCLAIM ^{®} 8200 commercialisé par COVESTRO est un PPG difonctionnel de masse moléculaire moyenne en nombre de 8 016 g/mol, et d'indice hydroxyle I_{OH} égal à 14 mg KOH/g ;
- méthacrylate de méthyle (MMA) commercialisé par ARKEMA ;
- BISOMER ^{®} PTE commercialisé par GEO SPECIALTY CHEMICALS est la toluidine éthoxylée ave 2,5 moles d'oxyde d'éthylène (OE) ayant une Mn d'environ 217,3 g/mol;
- RETIC BP 50 commercialisé par ARKEMA est le peroxyde de benzoyle ;
- PEVALEN commercialisé par PERSTORP est le tétravalérate de pentaérythritol ;
- HDK^{®} N20 : silice pyrogénée vendu par la société Wacker ;
- SR 256 commercialisé par SARTOMER est le 2(2-ethoxyethoxy) ethyl acrylate (EOEOEA) ;
- CN981^{®} commercialisé par SARTOMER est un uréthane-acrylate ayant une masse moléculaire moyenne en nombre (Mn) de 2 000 g/mol ;
- CN9400^{®} commercialisé par SARTOMER est un uréthane-allylique de fonctionalité 6 ayant une masse moléculaire moyenne en nombre (Mn) de 4 000 g/mol ;
- Copoblock : Block copolymer MMA-MABu de Mn moyenne 60 000 g/mol
- Clearstrength^{®} XT 100 : Modifiant choc MMA-Butadiène-Styrène (MBS) commercialisé par Arkema.

### Exemple 1 : préparation du polyuréthane P1

| Ingrédients | Quantité (g) | Quantité (%) |
|---|---|---|
| Scuranate T100 | 59,33 | 19,77 |
| Voranol P1010 | 46,83 | 15,61 |
| Bisomer PTE | 16,86 | 5,62 |
| Méthacrylate de méthyle | 90,7 | 30,23 |
| 2-hydroxyéthyl acrylate | 39,5 | 13,16 |

Dans un réacteur, le Voranol P1010 a été introduit et chauffé à 85-90°C sous vide pour déshydrater le polyol pendant environ 1h. Le Scuranate T100 a été introduit dans le réacteur et chauffé à 75°C pendant environ 2h. Puis, le réacteur a été équipé d'un réfrigérant. Le milieu réactionnel a été refroidi à 70°C, et la Bisomer PTE a été introduite. Après quelques minutes, le méthacrylate de méthyle a été introduit. Ensuite, le 2-hydroxyéthylméthacrylate a été introduit, et le milieu réactionnel a été mélangé à 70°C pendant 1h

### Exemple 2 : préparation du polyuréthane P2

| Formule | Quantité (g) | Quantité (%) |
|---|---|---|
| Acclaim 4200 | 222,7 | 44,58 |
| Acclaim 8200 | 63,6 | 12,73 |
| Suprasec X2004 | 68,8 | 13,82 |
| Bisomer PTE | 32,8 | 6,37 |
| Méthacrylate de méthyle (MMA) | 100,3 | 20,08 |
| 2-Hydroxyéthylméthacrylate (HEMA) | 11,5 | 2,41 |
| Borchi Kat 315 | 0,05 | 0,01 |

Dans un réacteur, l'Acclaim 4200 et l'Acclaim 8200 ont été introduits et chauffés à 85-90°C sous vide pour déshydrater les polyols pendant environ 1h. Le Suprasec X2004 a été introduit dans le réacteur et chauffé à 75°C pendant environ 2h. Puis, le réacteur a été équipé d'un réfrigérant. Le milieu réactionnel a été refroidi à 70°C, et la Bisomer PTE a été introduite. Après quelques minutes, le méthacrylate de méthyle a été introduit. Ensuite, le 2-hydroxyéthylméthacrylate et le Borchi Kat 315 ont été introduits, et le milieu réactionnel a été mélangé à 70°C pendant 1h.

A J+1, la viscosité brookfield de la composition obtenue a été mesurée à 23°C (Aiguille, 10T/min) : 29 000 mPa.s

### Exemple 3 : préparation des compositions

Dans un réacteur maintenu sous agitation constante et sous azote, les différents ingrédients constituant le composant A sont mélangés dans les proportions indiquées dans le tableau suivant à une température de 23°C.

Dans un réacteur maintenu sous agitation constante et sous azote, les différents ingrédients constituant le composant B sont mélangés dans les proportions indiquées dans le tableau suivant à une température de 23°C.

| **Composition n°1** | | | | | |
|---|---|---|---|---|---|
| **Composant A** | | | **Composant B** | | |
| **ingrédients** | **Formule (g)** | **%** | **ingrédients** | **Formule (g)** | **%** |
| Polyuréthane P1 (exemple 1) | 12 | 24 | Méthacrylate de méthyle (MMA) | 2,5 | 50 |
| CN 981 | 2 | 4 | Retic 50 | 2,5 | 50 |
| CN 9400 | 8 | 16 | Pevalen | 0 | 0 |
| 33% copoblock dans MMA | 12 | 24 | HDKN20 | 0 | 0 |
| 20% XT100 dans MMA | 11 | 22 | | | |
| HDKN 20 | 0 | 0 | | | |
| SR 256 | 5 | 10 | | | |
| TOTAL | 50 | 100 | TOTAL | 5 | 100 |

Le composant A et le composant B ci-dessus ont été mélangés, dans un ratio volumique 10 : 1.

Le mélange est effectué à une température de 23°C environ, selon le ratio volumique donné avec un mélangeur statique.

Une composition n°2 comparative a été préparée de la même façon avec les ingrédients suivants :

| **Composition n°2 (comparative)** | | | | | |
|---|---|---|---|---|---|
| **Composant A** | | | **Composant B** | | |
| **ingrédients** | **Formule (g)** | **%** | **ingrédients** | **Formule (g)** | **%** |
| MMA | 47 | | Méthacrylate de méthyle (MMA) | 2,5 | 50 |
| CN 981 | 6,3 | | Retic 50 | 2,5 | 50 |
| CN 9400 | 15 | | Pevalen | 0 | 0 |
| Bisomer PTE | 0,7 | | HDKN20 | 0 | 0 |
| M65ST | 13,1 | | | | |
| XT100 | 5,2 | | | | |
| HDKN 20 | 2,5 | | | | |
| SR 256 | 10,2 | | | | |
| TOTAL | 100 | | TOTAL | 5 | 100 |

### Résultats sur exothermicité

Les températures du mélange ont été relevées entre 0 min et 65 min.

La composition selon l'invention (composition n°1) conduit à une cinétique de réaction ayant avantageusement un exotherme contrôlé inférieur à 100°C, de préférence inférieur à 90°C (mesuré à partir d'un mélange de 30 ml de produit), ce qui est avantageusement inférieure à l'exotherme observé avec la composition n°2 comprenant la Bisomer^{®} PTE libre.

Ceci permet avantageusement d'éviter de d'endommager les substrats collés, et/ou permet de maintenir un bon aspect visuel du collage.

Par ailleurs, la figure 1 montre avantageusement que la composition n°1 de l'exemple 3 réticule avantageusement aussi rapidement qu'une composition n°2 comparative comprenant la bisomer PTE libre.

## Revendications

1. Procédé de préparation d'un polyuréthane comprenant :
- E1) une étape de préparation d'un polyuréthane à terminaisons NCO comprenant la réaction de polyaddition entre :
- i) au moins un polyisocyanate ;
- ii) au moins un polyol ; et
- iii) au moins une amine ayant la formule (I) ou (II) suivante : 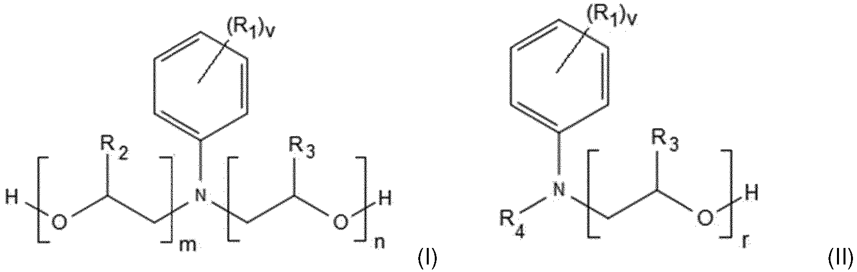 dans laquelle :
- m et n sont, indépendamment l'un de l'autre, un nombre entier allant de 1 à 150, de préférence de 1 à 100, préférentiellement de 1 à 72, avantageusement de 1 à 36, encore plus avantageusement de 1 à 18;
- r est un nombre entier allant de 1 à 200, de préférence de 1 à 104, préférentiellement de 1 à 72, avantageusement de 1 à 36 ;
- R¹ représente un radical choisi dans le groupe constitué d'un alkyle, linéaire ou ramifié, saturé ou insaturé, comprenant de 1 à 20 atomes de carbone, de préférence de 1 à 10 atomes de carbone ; d'un (hétéro)aryle comprenant de 6 à 12 atomes de carbone ; d'un cycloalkyle comprenant de 3 à 12 atomes de carbone ;
- v représente un nombre entier allant de 0 à 5 ;
- R² et R³ représentent, indépendamment l'un de l'autre, un atome d'halogène, un atome d'hydrogène ou un groupe alkyle, linéaire ou ramifié, comprenant de 1 à 12 atomes de carbone, ledit groupe alkyle étant éventuellement interrompu par au moins un atome d'oxygène ;
- R⁴ représente un atome d'hydrogène, un groupe arylalkyle, ou un groupe alkyle, linéaire ou ramifié, comprenant de 1 à 20 atomes de carbone, de préférence un groupe alkyle comprenant de 1 à 12 atomes de carbone, avantageusement de 1 à 6 atomes de carbone ;
- à condition que m + n > 2, de préférence n + m ≥ 2,5 ;
et
- E2) la réaction du produit formé à l'issue de l'étape E1) avec au moins un monomère (méth)acrylate ou allylique M comprenant au moins une fonction hydroxyle.

2. Procédé selon la revendication 1, **caractérisé en ce que** les amines de formule (I) sont choisies parmi celles dans lesquelles :
- R¹ représente un alkyle, linéaire ou ramifié, saturé ou insaturé, comprenant de 1 à 20 atomes de carbone, de préférence de 1 à 10 atomes de carbone ;
- m et n représentent, indépendamment l'un de l'autre, un nombre entier allant de 1 à 18, de préférence de 1 à 9, avantageusement de 1 à 5 ;
- R² et R³ représentent, indépendamment l'un de l'autre, un atome d'hydrogène ou un groupe alkyle, linéaire ou ramifié, comprenant de 1 à 12 atomes de carbone, ledit groupe alkyle étant éventuellement interrompu par au moins un atome d'oxygène, de préférence R² et R³ représente chacun un atome d'hydrogène ;
- avec m + n > 2, de préférence n + m ≥ 2,5.

3. Procédé selon la revendication 1 ou 2, **caractérisé en ce que** les amines de formule (I) sont celles dans lesquelles :
- R¹ représente un alkyle, linéaire ou ramifié, comprenant de 1 à 5 atomes de carbone, préférentiellement R¹ représente méthyle ;
- m et n représentent, indépendamment l'un de l'autre, un nombre entier allant de 1 à 18, de préférence de 1 à 9, avantageusement de 1 à 5 ;
- R² et R³ représentent un atome d'hydrogène ;
- avec que m + n > 2, de préférence n + m ≥ 2,5.

4. Procédé selon l'une quelconque des revendications 1 à 3, **caractérisé en ce que** l'étape E1) est réalisée en présence d'amine(s) de formule (I).

5. Procédé selon l'une quelconque des revendications 1 à 4, **caractérisé en ce que** le monomère M est choisi parmi :
- les monomères M1 ayant la formule (III) suivante :
CH₂=CH-R^{t}-OH (III)
dans laquelle R^{t} représente un radical alkylène linéaire ou ramifié comprenant de 1 à 9 atomes de carbone, de preference de 1 à 4 atomes de carbone;
ou
- les monomères M2 ayant la formule (IV) suivante :
CH₂=C(R⁶)-C(=O)-O-R⁷-OH (IV)
dans laquelle :
- R⁶ représente un hydrogène ou un méthyle ;
- R⁷ représente un radical hydrocarboné divalent linéaire ou ramifié, aliphatique ou cyclique, saturé ou insaturé, comprenant de préférence de 2 à 240 atomes de carbone, et étant éventuellement interrompu par un ou plusieurs hétéroatomes (tel que par exemple N, O, S, et en particulier O), et/ou éventuellement interrompu par un ou plusieurs groupes aromatiques, et/ou éventuellement interrompu par un ou plusieurs groupes divalents - N(Rₐ)- avec Rₐ représentant un radical alkyle linéaire ou ramifié comprenant de 1 à 22 atomes de carbone (amine tertiaires), -C(=O)O- (ester), -C(=O)NH- (amide), -NHC(=O)O-(carbamate), -NHC(=O)-NH- (urée), ou -C(=O)- (carbonyle), et/ou étant éventuellement substitué.

6. Procédé selon l'une quelconque des revendications 1 à 5, **caractérisé en ce que** le monomère M2 a l'une des formules suivantes :
- Formule (IV-1):
CH₂=C(R⁶)-C(=O)-O-R⁷-OH (IV-1)
dans laquelle :
- R⁶ est tel que défini dans la revendication 5;
- R⁷ représente un radical alkylène divalent linéaire ou ramifié, aliphatique ou cyclique, saturé ou insaturé, comprenant de 2 à 22 atomes de carbone, de préférence de 2 à 18, préférentiellement de 2 à 14, encore plus préférentiellement de 2 à 10, et avantageusement de 2 à 6 atomes de carbone ;
- Formule (IV-2):
CH₂=C(R⁶)-C(=O)-O-R⁸-O-[C(=O)-(CH₂)_{w}-O]ₛ-H (IV-2)
dans laquelle :
- R⁶ est tel que défini dans la revendication 5 ;
- w est un nombre entier allant de 1 à 10, de préférence de 1 à 5, et préférentiellement w est égal à 5 ;
- s est un nombre entier allant de 1 à 10, s étant de préférence égal à 2 ;
- R⁸ représente un radical alkylène divalent linéaire ou ramifié, aliphatique ou cyclique, saturé ou insaturé, comprenant de 2 à 22 atomes de carbone, de préférence de 2 à 18, préférentiellement de 2 à 14, encore plus préférentiellement de 2 à 10, et avantageusement de 2 à 6 atomes de carbone ;
- Formule (IV-3):
CH₂=C(R⁶)-C(=O)-O-[R⁹-O]ₜ-H (IV-3)
dans laquelle :
- R⁶ est tel que défini dans la revendication 5;
- R⁹ représente un radical alkylène divalent linéaire ou ramifié, aliphatique ou cyclique, saturé ou insaturé, comprenant de 2 à 4 atomes de carbone, t est un nombre entier allant de 2 à 120, de préférence de 1 à 10, t étant de préférence égal à 2 ou 3.

7. Procédé selon l'une quelconque des revendications 1 à 6, **caractérisé en ce que** le monomère M a l'une des formules (IV-1-1), (IV-1-2) ou (IV-1-3) suivantes :
- (IV-1-1) : 2-hydroxyéthylacrylate (HEA):
CH₂=CH-C(=O)-O-CH₂-CH₂-OH
- (IV-1-2): 2-hydroxypropylacrylate (HPA) :
CH₂=CH-C(=O)-O-CH₂-CH(Me)-OH
- (IV-1-3): 2-hydroxyéthylméthacrylate(HEMA).
CH₂=CH(Me)-C(=O)-O-CH₂-CH₂-OH

8. Procédé selon l'une quelconque des revendications 1 à 7, **caractérisé en ce que** l'étape E1) est mise en œuvre dans des quantités de réactifs telles que le rapport molaire NCO/OH (r1) va de 1,5 à 5, de préférence de 1,5 à 2,5.

9. Procédé selon l'une quelconque des revendications 1 à 8, caractérisé en ce l'étape E2) est mise en œuvre dans des quantités de réactifs telles que le rapport molaire OH/NCO (r2) est inférieur ou égal à 1, préférentiellement va de 0,90 à 1,00, et encore plus préférentiellement va de 0,95 à 1,00.

10. Polyuréthane P obtenu selon le procédé tel que défini selon l'une quelconque des revendications 1 à 9.

11. Polyuréthane P selon la revendication 10, comprenant de 0,5 % à 10 %, préférentiellement de 1 % à 5% en poids d'unités dérivées de l'amine de formule (I) ou (II) telles que définies dans l'une quelconque des revendications 1 à 3, de préférence de l'amine de formule (I).

12. Composition comprenant :
- une composition A comprenant :
- au moins un polymère P tel que défini dans l'une quelconque des revendications 10 à 11 ; et
- au moins un monomère vinylique ;
- une composition B comprenant :
- au moins un peroxyde ; et
- éventuellement au moins un monomère vinylique.

13. Composition selon la revendication 12, **caractérisée en ce que** les monomères vinyliques sont choisis parmi les monomères (méth)acrylates, en particulier choisi(s) dans le groupe constitué :
- des composés ayant la formule (V) suivante :
CH₂=C(R¹⁰)-COOR¹¹ (V)
dans laquelle :
- R¹⁰ représente un hydrogène, un halogène, un groupe CN, ou un groupe alkyle comprenant de 1 à 4 atomes de carbone ;
- R¹¹ est choisi dans le groupe constitué des alkyles, des cycloalkyles, des alcényles, des cycloalcényles, des alkylaryles, des arylalkyles ou des aryles, lesdits alkyles, des cycloalkyles, des alcényles, des cycloalcényles, des alkylaryles, des arylalkyles ou des aryles pouvant être éventuellement substitués et/ou interrompus par au moins un silane, un silicone, un oxygène, un halogène, un carbonyle, un hydroxyle, un ester, une urée, un uréthane, un carbonate, une amine, une amide, un soufre, un sulfonate, ou un sulfone ;
- des polyéthylène glycol di(méth)acrylates ;
- des tétrahydrofurane (méth)acrylates ;
- de l'hydroxypropyl (méth)acrylate ;
- de l'hexanediol di(méth)acrylate ;
- du triméthylol propane tri(méth)acrylate ;
- du diéthylèneglycol diméthacrylate ;
- du triéthylène glycol diméthacrylate ;
- du tétraéthylène glycol diméthacrylate ;
- du dipropylène glycol diméthacrylate ;
- du di-(pentaméthylène glycol diméthacrylate ;
- du tétraéthylène glycol diacrylate ;
- du diglycérol tétraméthacrylate ;
- du tétraméthylène diméthacrylate ;
- de l'éthylène diméthacrylate ;
- du néopentyl glycol diacrylate ;
- du triméthylol propane triacrylate ;
- des bisphénol A mono- et di(méth)acrylates ;
- des bisphénol F mono- et di(méth)acrylates; et
- de leurs mélanges.

14. Utilisation d'une composition telle que définie selon l'une quelconque des revendications 12 ou 13, comme adhésif, mastic ou revêtement, de préférence comme adhésif.

15. Utilisation selon la revendication 14, pour la réparation et/ou le collage structural ou semi-structural de matériaux dans le domaine du transport, automobile, de la marine, ou de la construction.

## Patentansprüche

1. Verfahren zur Herstellung eines Polyurethans, umfassend:
- E1) einen Schritt der Herstellung eines Polyurethans mit NCO-Endgruppen, umfassend die Polyadditionsreaktion zwischen
- i) mindestens einem Polyisocyanat;
- ii) mindestens einem Polyol; und
- iii) mindestens einem Amin mit der folgenden Formel (I) oder (II): 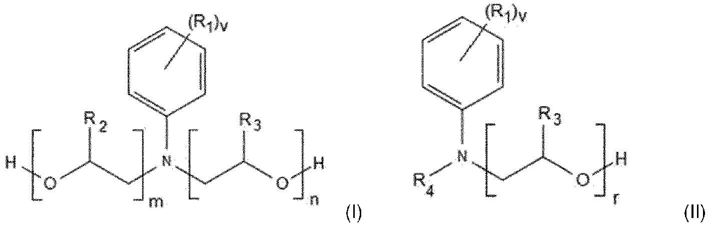 in der:
- m und n unabhängig voneinander eine ganze Zahl im Bereich von 1 bis 150, bevorzugt 1 bis 100, vorzugsweise 1 bis 72, vorteilhafterweise 1 bis 36, noch vorteilhafter 1 bis 18, sind;
- r eine ganze Zahl im Bereich von 1 bis 200, bevorzugt 1 bis 104, vorzugsweise 1 bis 72, vorteilhafterweise 1 bis 36, ist;
- R₁ für einen Rest steht, der aus der Gruppe bestehend aus einem gesättigten oder ungesättigten, linearen oder verzweigten Alkyl mit 1 bis 20 Kohlenstoffatomen, bevorzugt 1 bis 10 Kohlenstoffatomen; einem (Hetero)aryl mit 6 bis 12 Kohlenstoffatomen und einem Cycloalkyl mit 3 bis 12 Kohlenstoffatomen ausgewählt ist;
- v für eine ganze Zahl im Bereich von 0 bis 5 steht;
- R₂ und R₃ unabhängig voneinander für ein Halogenatom, ein Wasserstoffatom oder eine lineare oder verzweigte Alkylgruppe mit 1 bis 12 Kohlenstoffatomen stehen, wobei die Alkylgruppe gegebenenfalls durch mindestens ein Sauerstoffatom unterbrochen ist;
- R₄ für ein Wasserstoffatom, eine Arylalkylgruppe oder eine lineare oder verzweigte Alkylgruppe mit 1 bis 20 Kohlenstoffatomen, bevorzugt eine Alkylgruppe mit 1 bis 12 Kohlenstoffatomen, vorteilhafterweise mit 1 bis 6 Kohlenstoffatomen, steht;
- mit der Maßgabe, dass m + n > 2, bevorzugt n + m ≥ 2,5;
und
- E2) die Umsetzung des am Ende von Schritt E1) gebildeten Produkts mit mindestens einem (Meth)acrylat- oder Allylmonomer M mit mindestens einer Hydroxylfunktion.

2. Verfahren nach Anspruch 1, **dadurch gekennzeichnet, dass** die Amine der Formel (I) aus denjenigen ausgewählt werden, in denen:
- R₁ für ein gesättigtes oder ungesättigtes, lineares oder verzweigtes Alkyl mit 1 bis 20 Kohlenstoffatomen, bevorzugt 1 bis 10 Kohlenstoffatomen, steht;
- m und n unabhängig voneinander für eine ganze Zahl im Bereich von 1 bis 18, bevorzugt 1 bis 9, vorteilhafterweise 1 bis 5, stehen;
- R₂ und R₃ unabhängig voneinander für ein Wasserstoffatom oder eine lineare oder verzweigte Alkylgruppe mit 1 bis 12 Kohlenstoffatomen stehen, wobei die Gruppe gegebenenfalls durch mindestens ein Sauerstoffatom unterbrochen ist, vorzugsweise R₂ und R₃ jeweils für ein Wasserstoffatome stehen;
- wobei m + n > 2, bevorzugt n + m ≥ 2,5.

3. Verfahren nach Anspruch 1 oder 2, **dadurch gekennzeichnet, dass** die Amine der Formel (I) diejenigen sind, in denen:
- R₁ für ein gesättigtes oder ungesättigtes, lineares oder verzweigtes Alkyl mit 1 bis 5 Kohlenstoffatomen steht, vorzugsweise R₁ für Methyl steht;
- m und n unabhängig voneinander für eine ganze Zahl im Bereich von 1 bis 18, bevorzugt 1 bis 9, vorteilhafterweise 1 bis 5, stehen;
- R₂ und R₃ für ein Wasserstoffatome stehen;
- wobei m + n > 2, bevorzugt n + m ≥ 2,5.

4. Verfahren nach einem der Ansprüche 1 bis 3, **dadurch gekennzeichnet, dass** der Schritt E1) in Gegenwart eines oder mehrerer Amine der Formel (I) durchgeführt wird.

5. Verfahren nach einem der Ansprüche 1 bis 4, **dadurch gekennzeichnet, dass** das Monomer M ausgewählt wird aus:
- Monomeren M1 mit der folgenden Formel (III):
CH₂=CH-R^{t}-OH (III)
in der R^{t} für einen linearen oder verzweigten Alkylenrest mit 1 bis 9 Kohlenstoffatomen, bevorzugt 1 bis 4 Kohlenstoffatomen, steht; oder
- Monomeren M2 mit der folgenden Formel (IV):
CH₂=C(R⁶)-C(=O)-O-R⁷-OH (IV)
in der R⁶ für einen Wasserstoff oder ein Methyl steht;
R⁷ für einen linearen oder verzweigten, aliphatischen oder cyclischen, gesättigten oder ungesättigten zweiwertigen Kohlenwasserstoffrest steht, der vorzugsweise 2 bis 240 Kohlenstoffatome umfasst und gegebenenfalls durch ein oder mehrere Heteroatome (wie beispielsweise N, O, S und insbesondere O) unterbrochen ist und/oder gegebenenfalls durch eine oder mehrere aromatische Gruppen unterbrochen ist und/oder gegebenenfalls durch eine oder mehrere zweiwertige Gruppen -N(Rₐ)-, wobei Rₐ für einen linearen oder verzweigten Alkylrest mit 1 bis 22 Kohlenstoffatomen steht (tertiäres Amin), -C(=O)O- (Ester), -C(=O)NH-(Amid), -NHC(=O)O- (Carbamat), -NHC(=O)NH-(Harnstoff) oder -C(=O)- (Carbonyl), unterbrochen ist und/oder gegebenenfalls substituiert ist.

6. Verfahren nach einem der Ansprüche 1 bis 5, **dadurch gekennzeichnet, dass** das Monomer M2 eine der folgenden Formeln aufweist:
- Formel (IV-1):
CH₂=C(R⁶)-C(=O)-O-R⁷-OH (IV-1)
in der:
- R⁶ wie in Anspruch 5 definiert ist;
- R⁷ für einen linearen oder verzweigten, aliphatischen oder cyclischen, gesättigten oder ungesättigten zweiwertigen Alkylenrest mit 2 bis 22 Kohlenstoffatomen, bevorzugt 2 bis 18, vorzugsweise 2 bis 14, noch weiter bevorzugt 2 bis 10 und vorteilhafterweise 2 bis 6 Kohlenstoffatomen steht;
- Formel (IV-2):
CH₂=C(R⁶)-C(=O)-O-R⁸-O-[C(=O)-(CH₂)_{w}-O]ₛ-H (IV-2)
in der:
- R⁶ wie in Anspruch 5 definiert ist;
- w eine ganze Zahl im Bereich von 1 bis 10, bevorzugt 1 bis 5, steht und w vorzugsweise gleich 5 ist;
- s eine ganze Zahl im Bereich von 1 bis 10 ist, wobei s bevorzugt gleich 2 ist;
- R⁸ für einen linearen oder verzweigten, aliphatischen oder cyclischen, gesättigten oder ungesättigten zweiwertigen Alkylenrest mit 2 bis 22 Kohlenstoffatomen, bevorzugt 2 bis 18, vorzugsweise 2 bis 14, noch weiter bevorzugt 2 bis 10 und vorteilhafterweise 2 bis 6 Kohlenstoffatomen, steht;
- Formel (IV-3):
CH₂=C(R⁶)-C(=O)-O-[R⁹-O]ₜ-H (IV-3)
in der:
- R⁶ wie in Anspruch 5 definiert ist;
- R⁹ für einen linearen oder verzweigten, aliphatischen oder cyclischen, gesättigten oder ungesättigten zweiwertigen Alkylenrest mit 2 bis 4 Kohlenstoffatomen steht, t eine ganze Zahl im Bereich von 2 bis 120, bevorzugt 1 bis 10, ist, wobei t bevorzugt gleich 2 oder 3 ist.

7. Verfahren nach einem der Ansprüche 1 bis 6, **dadurch gekennzeichnet, dass** das Monomer M eine der folgenden Formeln (IV-1-1), (IV-1-2) oder (IV-1-3) aufweist:
- (IV-1-1): 2-Hydroxyethylacrylat (HEA):
CH₂=CH-C(=O)-O-CH₂-CH₂-OH
- (IV-1-2): 2-Hydroxypropylacrylat (HPA):
CH₂=CH-C(=O)-O-CH₂-CH(Me)-OH
- (IV-1-3): 2-Hydroxyethylmethacrylat (HEMA):
CH₂=CH(Me)-C(=O)-O-CH₂-CH₂-OH.

8. Verfahren nach einem der Ansprüche 1 bis 7, **dadurch gekennzeichnet, dass** der Schritt E1) in solchen Reaktantenmengen durchgeführt wird, dass das NCO/OH-Molverhältnis (r1) im Bereich von 1,5 bis 5, bevorzugt 1,5 bis 2,5, liegt.

9. Verfahren nach einem der Ansprüche 1 bis 8, **dadurch gekennzeichnet, dass** der Schritt E2) in solchen Reaktantenmengen durchgeführt wird, dass das OH/NCO-Molverhältnis (r2) kleiner oder gleich 1 ist, vorzugsweise im Bereich von 0,90 bis 1,00 liegt und noch weiter bevorzugt im Bereich von 0,95 bis 1,00 liegt.

10. Polyurethan P, erhalten gemäß dem wie in einem der Ansprüche 1 bis 9 definierten Verfahren.

11. Polyurethan P nach Anspruch 10, umfassend 0,5 bis 10 Gew.-%, vorzugsweise 1 bis 5 Gew.-%, Einheiten, die sich von dem Amin der Formel (I) oder (II) gemäß einem der Ansprüche 1 bis 3, bevorzugt dem Amin der Formel (I), ableiten.

12. Zusammensetzung, umfassend:
- eine Zusammensetzung A, umfassend:
- mindestens ein wie in einem der Ansprüche 10 bis 11 definiertes Polymer P; und
- mindestens ein Vinylmonomer;
- eine Zusammensetzung B, umfassend:
- mindestens ein Peroxid; und
- gegebenenfalls mindestens ein Vinylmonomer.

13. Zusammensetzung nach Anspruch 12, **dadurch gekennzeichnet, dass** die Vinylmonomere aus (Meth)acrylat-Monomeren ausgewählt sind, insbesondere ausgewählt aus der Gruppe bestehend aus:
- Verbindungen mit der folgenden Formel (V):
CH₂=C(R¹⁰)-COOR¹¹ (V)
in der:
- R¹⁰ für einen Wasserstoff, ein Halogen, eine CN-Gruppe oder eine Alkylgruppe mit 1 bis 4 Kohlenstoffatomen steht;
- R¹¹ aus der Gruppe bestehend aus Alkylgruppen, Cycloalkylgruppen, Alkenylgruppen, Cycloalkenylgruppen, Alkylarylgruppen, Arylalkylgruppen oder Arylgruppen ausgewählt ist, wobei die Alkylgruppen, Cycloalkylgruppen, Alkenylgruppen, Cycloalkenylgruppen, Alkylarylgruppen, Arylalkylgruppen oder Arylgruppen gegebenenfalls durch mindestens ein Silan, ein Silikon, einen Sauerstoff, ein Halogen, ein Carbonyl, ein Hydroxyl, einen Ester, einen Harnstoff, ein Urethan, ein Carbonat, ein Amin, ein Amid, einen Schwefel, ein Sulfonat oder ein Sulfon substituiert und/oder unterbrochen sind;
- Polyethylenglykoldi(meth)acrylaten;
- Tetrahydrofuran(meth)acrylaten;
- Hydroxypropyl(meth)acrylat;
- Hexandioldi(meth)acrylat;
- Trimethylolpropantri(meth)acrylat;
- Diethylenglykoldimethacrylat;
- Triethylenglykoldimethacrylat;
- Tetraethylenglykoldimethacrylat;
- Dipropylenglykoldimethacrylat;
- Di(pentamethylenglykol)dimethacrylat;
- Tetraethylenglykoldiacrylat;
- Diglycerintetramethacrylat;
- Tetramethylendimethacrylat;
- Ethylendimethacrylat;
- Neopentylglykoldiacrylat;
- Trimethylolpropantriacrylat;
- Bisphenol-A-mono- und -di(meth)acrylaten;
- Bisphenol-F-mono- und -di(meth)acrylaten; und
- Mischungen davon.

14. Verwendung einer wie in einem der Ansprüche 12 oder 13 definierten Zusammensetzung als Klebstoff, Dichtstoff oder Beschichtung, bevorzugt als Klebstoff.

15. Verwendung nach Anspruch 14 zur Reparatur und/oder zum strukturellen oder semistrukturellen Kleben von Materialien im Bereich Transport, Automobil, Schifffahrtswesen oder Bauwesen.

## Claims

1. Process for the preparation of a polyurethane comprising:
- E1) a stage of preparation of a polyurethane having NCO endings comprising the polyaddition reaction between:
- i) at least one polyisocyanate;
- ii) at least one polyol; and
- iii) at least one amine having the following formula (I) or (II): 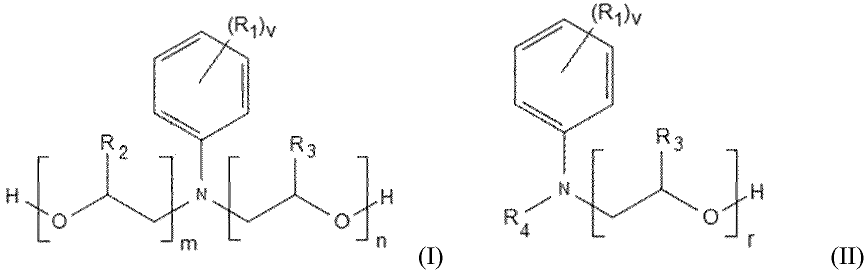 in which:
- m and n are, independently of each other, an integer ranging from 1 to 150, preferably from 1 to 100, preferentially from 1 to 72, advantageously from 1 to 36, more advantageously still from 1 to 18;
- r is an integer ranging from 1 to 200, preferably from 1 to 104, preferentially from 1 to 72, advantageously from 1 to 36;
- R¹ represents a radical chosen from the group consisting of a saturated or unsaturated and linear or branched alkyl comprising from 1 to 20 carbon atoms, preferably from 1 to 10 carbon atoms; of a (hetero)aryl comprising from 6 to 12 carbon atoms; of a cycloalkyl comprising from 3 to 12 carbon atoms;
- v represents an integer ranging from 0 to 5;
- R² and R³ represent, independently of each other, a halogen atom, a hydrogen atom or a linear or branched alkyl group comprising from 1 to 12 carbon atoms, said alkyl group being optionally interrupted by at least one oxygen atom;
- R⁴ represents a hydrogen atom, an arylalkyl group or a linear or branched alkyl group comprising from 1 to 20 carbon atoms, preferably an alkyl group comprising from 1 to 12 carbon atoms, advantageously from 1 to 6 carbon atoms;
- provided that m + n > 2, preferably n + m ≥ 2.5;
and
- E2) the reaction of the product formed on conclusion of stage E1) with at least one (meth)acrylate or allyl monomer M comprising at least one hydroxyl functional group.

2. Process according to Claim 1, **characterized in that** the amines of formula (I) are chosen from those in which:
- R¹ represents a saturated or unsaturated and linear or branched alkyl comprising from 1 to 20 carbon atoms, preferably from 1 to 10 carbon atoms;
- m and n represent, independently of each other, an integer ranging from 1 to 18, preferably from 1 to 9, advantageously from 1 to 5;
- R² and R³ represent, independently of each other, a hydrogen atom or a linear or branched alkyl group comprising from 1 to 12 carbon atoms, said alkyl group being optionally interrupted by at least one oxygen atom; preferably, R² and R³ each represent a hydrogen atom;
- with m + n > 2, preferably n + m ≥ 2.5.

3. Process according to Claim 1 or 2, **characterized in that** the amines of formula (I) are those in which:
- R¹ represents a linear or branched alkyl comprising from 1 to 5 carbon atoms; preferentially, R¹ represents methyl;
- m and n represent, independently of each other, an integer ranging from 1 to 18, preferably from 1 to 9, advantageously from 1 to 5;
- R² and R³ represent a hydrogen atom;
- with that m + n > 2, preferably n + m ≥ 2.5.

4. Process according to any one of Claims 1 to 3, **characterized in that** stage E1) is carried out in the presence of amine(s) of formula (I).

5. Process according to any one of Claims 1 to 4, **characterized in that** the monomer M is chosen from:
- M1 monomers having the following formula (III):
CH₂=CH-R^{t}-OH (III)
in which R^{t} represents a linear or branched alkylene radical comprising from 1 to 9 carbon atoms, preferably from 1 to 4 carbon atoms;
or
- M2 monomers having the following formula (IV):
CH₂=C(R⁶)-C(=O)-O-R⁷-OH (IV)
in which:
- R⁶ represents a hydrogen or a methyl;
- R⁷ represents a saturated or unsaturated, aliphatic or cyclic, linear or branched, divalent hydrocarbon radical preferably comprising from 2 to 240 carbon atoms, and being optionally interrupted by one or more heteroatoms (such as, for example, N, O or S, and in particular O), and/or optionally interrupted by one or more aromatic groups, and/or optionally interrupted by one or more divalent -N(Rₐ)- groups with Rₐ representing a linear or branched alkyl radical comprising from 1 to 22 carbon atoms (tertiary amine), -C(=O)O- (ester), -C(=O)NH- (amide), -NHC(=O)O- (carbamate), -NHC(=O)-NH-(urea) or -C(=O)- (carbonyl) groups, and/or being optionally substituted.

6. Process according to any one of Claims 1 to 5, **characterized in that** the M2 monomer has one of the following formulae:
- Formula (IV-1):
CH₂=C(R⁶)-C(=O)-O-R⁷-OH (IV-1)
in which:
- R⁶ is as defined in Claim 5;
- R⁷ represents a saturated or unsaturated, linear or branched, aliphatic or cyclic, divalent alkylene radical comprising from 2 to 22 carbon atoms, preferably from 2 to 18, preferentially from 2 to 14, more preferentially still from 2 to 10 and advantageously from 2 to 6 carbon atoms;
- Formula (IV-2):
CH₂=C(R⁶)-C(=O)-O-R⁸-O-[C(=O)-(CH₂)_{w}-O]ₛ-H (IV-2)
in which:
- R⁶ is as defined in Claim 5;
- w is an integer ranging from 1 to 10, preferably from 1 to 5, and preferentially w is equal to 5;
- s is an integer ranging from 1 to 10, s preferably being equal to 2;
- R⁸ represents a saturated or unsaturated, linear or branched, aliphatic or cyclic, divalent alkylene radical comprising from 2 to 22 carbon atoms, preferably from 2 to 18, preferentially from 2 to 14, more preferentially still from 2 to 10 and advantageously from 2 to 6 carbon atoms;
- Formula (IV-3):
CH₂=C(R⁶)-C(=O)-O-[R⁹-O]ₜ-H (IV-3)
in which:
- R⁶ is as defined in Claim 5;
- R⁹ represents a saturated or unsaturated, linear or branched, aliphatic or cyclic, divalent alkylene radical comprising from 2 to 4 carbon atoms and t is an integer ranging from 2 to 120, preferably from 1 to 10, t preferably being equal to 2 or 3.

7. Process according to any one of Claims 1 to 6, **characterized in that** the monomer M has one of the following formulae (IV-1-1), (IV-1-2) or (IV-1-3):
- (IV-1-1): 2-hydroxyethyl acrylate (HEA):
CH₂=CH-C(=O)-O-CH₂-CH₂-OH
- (IV-1-2): 2-hydroxypropyl acrylate (HPA):
CH₂=CH-C(=O)-O-CH₂-CH(Me)-OH
- (IV-1-3): 2-hydroxyethyl methacrylate (HEMA).
CH₂=CH(Me)-C(=O)-O-CH₂-CH₂-OH

8. Process according to any one of Claims 1 to 7, **characterized in that** stage E1) is carried out in amounts of reactants such that the NCO/OH molar ratio (r1) ranges from 1.5 to 5, preferably from 1.5 to 2.5.

9. Process according to any one of Claims 1 to 8, **characterized in that** stage E2) is carried out in amounts of reactants such that the OH/NCO molar ratio (r2) is less than or equal to 1, preferentially ranges from 0.90 to 1.00 and more preferentially still ranges from 0.95 to 1.00.

10. Polyurethane P obtained according to the process as defined according to any one of Claims 1 to 9.

11. Polyurethane P according to Claim 10, comprising from 0.5% to 10%, preferentially from 1% to 5%, by weight of units derived from the amine of formula (I) or (II) as are defined in any one of Claims 1 to 3, preferably from the amine of formula (I).

12. Composition comprising:
- a composition A comprising:
- at least one polymer P as defined in any one of Claims 10 to 11; and
- at least one vinyl monomer;
- a composition B comprising:
- at least one peroxide; and
- optionally at least one vinyl monomer.

13. Composition according to Claim 12, **characterized in that** the vinyl monomers are chosen from (meth)acrylate monomers, in particular chosen from the group consisting of:
- compounds having the following formula (V):
CH₂=C(R¹⁰)-COOR¹¹ (V)
in which:
- R¹⁰ represents a hydrogen, a halogen, a CN group or an alkyl group comprising from 1 to 4 carbon atoms;
- R¹¹ is chosen from the group consisting of alkyls, cycloalkyls, alkenyls, cycloalkenyls, alkylaryls, arylalkyls and aryls, it being possible for said alkyls, cycloalkyls, alkenyls, cycloalkenyls, alkylaryls, arylalkyls or aryls to be optionally substituted and/or interrupted by at least one silane, one silicone, one oxygen, one halogen, one carbonyl, one hydroxyl, one ester, one urea, one urethane, one carbonate, one amine, one amide, one sulfur, one sulfonate or one sulfone;
- polyethylene glycol di(meth)acrylates;
- tetrahydrofuran (meth)acrylates;
- hydroxypropyl (meth)acrylate;
- hexanediol di(meth)acrylate;
- trimethylolpropane tri(meth)acrylate;
- diethylene glycol dimethacrylate;
- triethylene glycol dimethacrylate;
- tetraethylene glycol dimethacrylate;
- dipropylene glycol dimethacrylate;
- di(pentamethylene glycol) dimethacrylate;
- tetraethylene glycol diacrylate;
- diglycerol tetramethacrylate;
- tetramethylene dimethacrylate;
- ethylene dimethacrylate;
- neopentyl glycol diacrylate;
- trimethylolpropane triacrylate;
- bisphenol A mono- and di(meth)acrylates;
- bisphenol F mono- and di(meth)acrylates; and
- their mixtures.

14. Use of a composition as defined according to either of Claims 12 or 13 as adhesive, mastic or coating, preferably as adhesive.

15. Use according to Claim 14 in the repair and/or the structural or semistructural adhesive bonding of materials in the transportation, motor vehicle, marine or construction field.
